# FASCICULE DE BREVET EUROPEEN

(11) **EP 1 690 739 B1**
(45) Date de publication et mention de la délivrance du brevet: **30.11.2011**
(21) Numéro de dépôt: 06290200.2
(22) Date de dépôt: 06.02.2006
(51) Int. Cl.: B60R 7/02

(54) **Bac pour l'habillage des coffres de vehicules automobiles ou analogues**
In den Kofferraum von Fahrzeugen oder dergleichen einsetzbare Schale
Liner tray for vehicle boot for motor vehicles or the like

(30) Priorité: 14.02.2005 FR 0501440
(43) Date de publication de la demande: 16.08.2006
(73) Titulaire: Novetud, F-77185 Lognes (FR)
(72) Inventeur: Ferrero, Jean-Michel, 93220 Gagny (FR)
(74) Mandataire: Flavenot, Bernard

(56) Documents cités:
- DE-U1- 29 807 142
- US-A- 5 094 375
- US-A- 5 584 412
- US-A1- 2002 000 733

## Description

La présente invention concerne les bacs pour l'habillage des coffres des véhicules automobiles ou analogues, qui comportent un plateau comprenant une paroi de fond et un bord latéral définissant un volume de réception, la paroi de fond comportant des nervures en relief vers l'intérieur du plateau.

On sait qu'il existe des bacs conçus pour habiller les planchers des coffres des véhicules automobiles ou analogues, par exemple à usage professionnel, essentiellement pour protéger le plancher dans le cas où le coffre serait utilisé pour transporter des produits corrosifs ou analogues susceptibles de se renverser et en conséquence d'attaquer la paroi du plancher de ce coffre. Ces bacs sont généralement réalisés par moulage, injection ou analogue, en matériaux de type plastique chimiquement inertes vis-à-vis de nombreux produits corrosifs et/ou dangereux.

Il existe aussi de tels bacs pour les coffres des véhicules de tourisme, visant simplement à protéger le plancher de ces coffres et éviter qu'il ne se salisse au contact des produits, objets, etc. que les propriétaires de ces véhicules peuvent être amenés à transporter.

Dans tous les cas, il peut être avantageux qu'un tel bac soit apte à être compartimenté, et même de façon modulable, pour bien séparer les divers objets qu'il est susceptible de contenir.

Il a été réalisé de tels bacs avec la possibilité de réaliser des compartiments modulables comme par exemple celui qui est décrit dans le US 2002/000733. Mais, à ce jour, aucun d'eux n'a réellement donné satisfaction à cause, soit de la complication de la réalisation des compartiments, soit de leur manque d'esthétique, soit de leur trop grand encombrement et/ou de leur faible fiabilité dans le temps.

Aussi, la présente invention a-t-elle pour but de réaliser un bac pour habiller par exemple le plancher du coffre d'un véhicule automobile ou analogue, pour essentiellement le protéger, qui pallie au moins en grande partie les inconvénients mentionnés ci-dessus des bacs similaires de l'art antérieur.

Plus précisément, la présente invention a pour objet un bac pour l'habillage d'un coffre de véhicule automobile ou analogue, ayant les caractéristiques énoncées dans la revendication 1.

D'autres caractéristiques et avantages de l'invention apparaîtront au cours de la description suivante donnée en regard des dessins annexés à titre illustratif mais nullement limitatif, dans lesquels :
Les figures 1 à 3 représentent trois vues en coupe de côté d'une partie d'un mode de réalisation du bac selon l'invention, respectivement dans trois configurations qui peuvent être prises par ce bac, et
Les figures 4 et 5 représentent, en vue de dessus, un mode de réalisation complet du bac selon l'invention en accord avec le mode de réalisation illustré sur les figures 1 à 3, respectivement dans deux configurations possibles de ce bac.

Il est tout d'abord précisé que, sur les figures, les mêmes références désignent les mêmes éléments, quelle que soit la figure sur laquelle elles apparaissent et quelle que soit la forme de représentation de ces éléments. De même, si des éléments ne sont pas spécifiquement référencés sur l'une des figures, leurs références peuvent être aisément retrouvées en se reportant à une autre figure.

Il est aussi précisé que les figures représentent essentiellement un seul mode de réalisation de l'objet selon l'invention, mais qu'il peut exister d'autres modes de réalisation qui répondent à la définition de cette invention.

La présente invention concerne un bac pour l'habillage d'un coffre de véhicule automobile ou analogue.

Par référence aux cinq figures annexées, ce bac comporte un plateau 1 comprenant une paroi de fond 3 et un bord latéral 5 définissant un volume intérieur 7, la paroi de fond comportant des nervures 9 en relief vers l'intérieur du plateau, ces nervures visant à rigidifier le plateau et éventuellement à servir de points d'appui renforcés pour les objets aptes à être contenus dans un tel plateau.

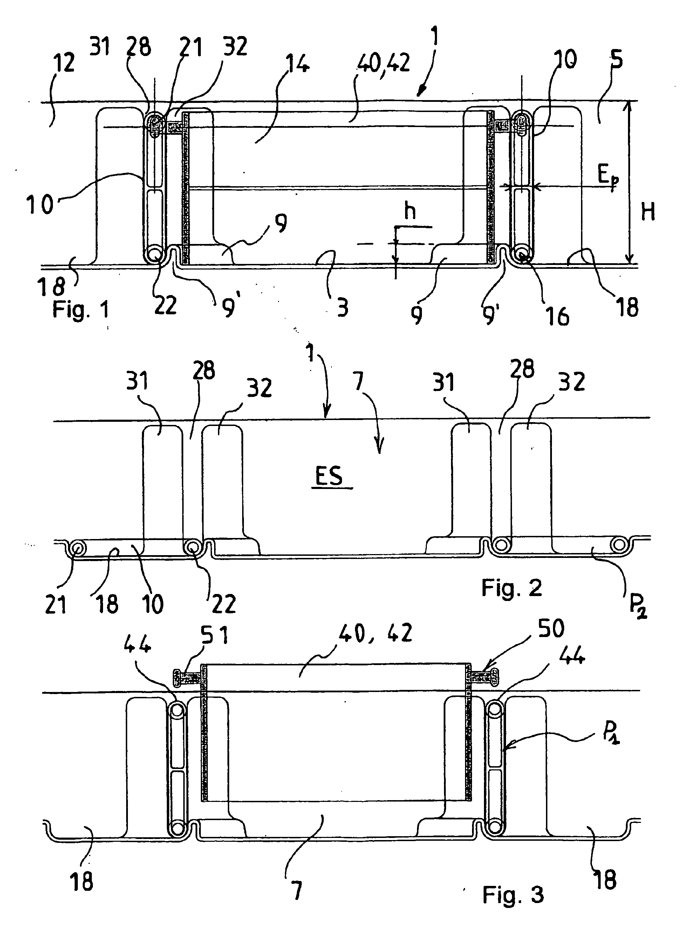

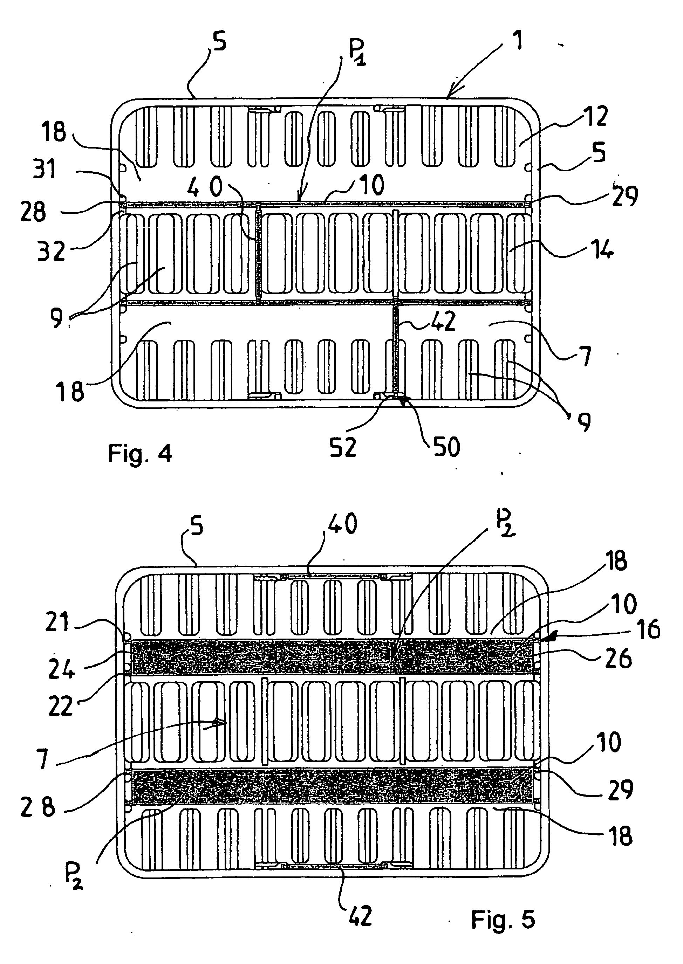

Le bac comporte en outre au moins une cloison de séparation 10 pour diviser le volume intérieur 7 du plateau en au moins deux parties 12, 14, le mode de réalisation illustré comportant deux cloisons de séparation pour réaliser au moins trois compartiments, et des moyens 16 pour monter la cloison de séparation 10 déplaçable dans le plateau 1 entre au moins deux positions, une première position P1 dans laquelle la cloison de séparation est sensiblement perpendiculaire au plan général de la paroi de fond 3, figures 1, 3 et 4, et une seconde position P2 dans laquelle cette même cloison de séparation est plaquée contre la paroi de fond 3 dans une zone 18 ne comportant pas de nervure, figures 2 et 5. Le terme "perpendiculaire" utilisé dans la présente description définit une direction générale qui peut être soit strictement perpendiculaire soit plus ou moins proche de cette position.

Dans une réalisation possible et avantageuse pour sa simplicité, les moyens 16 pour monter la cloison de séparation 10 déplaçable entre les deux positions P1, P2 telles que définies ci-dessus, comportent au moins une paire d'ergots 21, 22, ... (fig. 5) montée à chacune des deux extrémités 24, 26 de la cloison de séparation 10, les quatre ergots 21, 22, ... étant situés en saillie sur les extrémités 24, 26 de la cloison de séparation sensiblement dans le plan général de la cloison, deux rainures 28, 29 en regard l'une de l'autre réalisées sur le bord latéral 5 du plateau, les deux rainures étant situées dans un même plan sensiblement perpendiculaire à la paroi de fond 3 du plateau, ces rainures étant en outre agencées de façon que les ergots 21, 22, ... puissent y coulisser.

De plus, la distance séparant les extrémités libres les plus éloignées des ergots est inférieure à la distance séparant les fonds des deux rainures, et la longueur de la cloison de séparation est au plus égale à la distance séparant les plans des ouvertures d'entrée de ces deux rainures.

De façon préférentielle, dans le but d'obtenir un plateau 1 le plus rigide possible, comme illustré sur les figures et plus particulièrement visible sur les figures 4 et 5, chaque rainure 28, 29 est délimitée par deux bossages 31, 32 oblongs parallèles en saillie sur le bord latéral 5 du plateau 1 vers l'intérieur de celui-ci.

Il est en outre avantageux que la largeur de la cloison de séparation 10 soit sensiblement égale à la profondeur H du plateau, et préférable que l'épaisseur Ep (Fig. 1) de la cloison de séparation 10 soit au plus égale à la hauteur h des nervures 9 faisant saillie sur la paroi de fond 3 du plateau, et même inférieure pour éviter que des objets lourds ne viennent reposer sur cette cloison quand elle est dans sa position P2.

De façon avantageuse, le plateau 1 peut comporter en outre une nervure continue 9' reliant les deux portions opposées du bord latéral 5 du plateau sur lesquelles sont respectivement réalisées les deux rainures 28, 29, cette nervure continue 9' bordant la zone 18 ne comportant pas de nervure 9 faisant saillie sur la paroi de fond 3 du plateau et étant située dans le demi-espace ES défini par le plan passant sensiblement par les deux rainures 28, 29 et ne contenant pas la cloison de séparation 10 quand elle est dans sa seconde position P2.

De cette façon, un espace déterminé, délimité par exemple par le bord latéral 5 du plateau et la cloison de séparation 10, comporte un fond défini entre les nervures en relief 9 et la nervure continue 9', qui ne communique pas avec les autres parties du fond du plateau 1. Cet espace déterminé peut, dans une certaine limite, contenir un liquide sans qu'il s'écoule dans les parties voisines du fond du plateau. Un tel agencement peut être utile, par exemple pour le transport de chaussures de ski encore plus ou moins recouvertes de neige. L'eau de la fonte de cette neige restera dans le compartiment dans lequel les chaussures ont été placées et ne s'écoulera pas vers les autres compartiments, bien entendu si la quantité de neige n'est pas trop importante ce qui est généralement le cas car les skieurs ont l'habitude d'éliminer, de leurs chaussures de ski, le plus de neige possible avant de les ranger dans le coffre de leur voiture.

Il est aussi avantageux que le bac selon l'invention comporte en outre au moins une entretoise de division 40, 42, ... amovible, l'exemple illustré sur les figures en comportant deux, et des moyens 50 pour relier l'entretoise de division à deux points appartenant respectivement aux deux éléments des deux paires d'éléments suivantes : rebord libre du bord latéral 5 du plateau 1 et rebord 44 de la cloison de séparation 10 qui est le plus éloigné de la paroi de fond 3 du plateau 1 quand cette cloison de séparation 10 est dans sa première position P1, les rebords libres de deux cloisons de séparation 10, figure 4.

Les moyens 50 définis ci-dessus pour relier l'entretoise de division 40, 42, ... aux deux points sont par exemple constitués par des emboîtements mâle-femelle comportant chacun un téton 51 et une encoche correspondante 52 apte à emprisonner le téton par enclipsage. Il est évident qu'il sera prévu une pluralité de ces encoches 52 tout le long des cloisons de séparation 10 et du bord latéral 5 du plateau 1 pour pouvoir réaliser le plus de divisions possibles des compartiments du bac réalisés avec les cloisons de séparation 10.

Enfin, il est prévu, de façon préférentielle, que le plateau 1 et les bossages 31, 32 soient réalisés d'une seule pièce par moulage, la ou les cloisons de séparation et les entretoises de division pouvant être réalisées de différentes façons, entièrement en plastique ou en une combinaison de plastique (par exemple pour les tétons 51) et de métal comme de l'aluminium ou analogue pour la cloison elle-même.

Le compartimentage d'un plateau 1 à l'aide d'une cloison de séparation 10, ou de plusieurs de ces cloisons, s'obtient de la façon suivante décrite ci-dessous en regard plus particulièrement des figures 4 et 5.

On commence tout d'abord par associer la (ou les) cloison 10 avec le plateau 1. Pour cela, on dispose les deux ergots 22 d'une cloison 10, qui ont une fonction de pivots, dans, respectivement, les rainures 28, 29 se faisant face, et on les fait glisser vers la paroi de fond 3 du plateau 1, tout en maintenant les autres ergots 21, qui ont essentiellement une fonction de maintien, dans l'axe des rainures pour qu'ils puissent à leur tour y pénétrer. La cloison de séparation 10 est déplacée par rapport aux rainures 28, 29 jusqu'à ce que les ergots pivots 22 butent contre la paroi de fond 3 du plateau. La cloison de séparation est ainsi en position P1 sensiblement verticale et réalise un compartimentage du plateau, comme plus particulièrement illustré sur les figures 1, 3 et 4. La figure 4 représente un bac comportant deux cloisons de séparation 10 partageant le volume intérieur 7 du plateau en trois compartiments 12, 14, ....

Si l'on veut mettre en place la cloison de séparation 10 sans réaliser le compartimentage du volume intérieur 7 du plateau, on dispose les deux ergots pivots 22 de la cloison 10 respectivement dans les rainures 28, 29 et on les fait glisser vers la paroi de fond 3 du plateau 1, tout en maintenant les ergots de maintien 21 en dehors de ces rainures. Lorsque les ergots pivots 22 viennent au contact de la paroi de fond 3 du plateau, la cloison de séparation 10 est rabattue dans la partie 18 sans nervure, pour prendre sa position P2 comme celle illustrée sur la figure 2. La figure 5 représente un mode de réalisation du bac comportant deux cloisons de séparation 10 qui sont toutes les deux rabattues contre la paroi de fond 3 du plateau.

Le passage de l'une des positions P1, P2 à l'autre se fait très facilement. Par exemple, lorsque la cloison est en position P2 et que l'on veut la faire passer en position P1, il suffit de la soulever légèrement, de lui faire subir une rotation autour des ergots pivots 22 pour amener les ergots de maintien 21 au-dessus des rainures et dans leur alignement, puis de faire redescendre la cloison pour que ces ergots de maintien glissent dans les rainures jusqu'à ce que les ergots pivots viennent buter contre la paroi de fond 3 du plateau. Le passage de la position P1 à la position P2 se fait de façon inverse à celle décrite ci-dessus.

Quant aux entretoises de division 40, 42, au moyen de leurs tétons 51 et des encoches 52, elles peuvent se positionner entre deux cloisons de séparation 10, comme l'entretoise 40 illustrée sur la figure 4, ou entre le bord latéral 5 du plateau et une cloison de séparation 10, comme l'entretoise 42 illustrée sur cette même figure 4.

Dans la configuration selon la figure 1, l'entretoise de division 40, 42 est montée en coopération avec deux cloisons de séparation 10, tandis que la figure 3 représente une configuration dans laquelle l'entretoise de division est prête à coopérer avec ces deux cloisons de séparation.

Quand ces entretoises de division 40, 42 ne sont pas utilisées, elles peuvent être rangées en étant plaquées contre la paroi intérieure du bord latéral 5 du plateau, comme illustré sur la figure 5.

## Revendications

1. Bac pour l'habillage d'un coffre de véhicule automobile ou analogue, comportant un plateau (1) comprenant une paroi de fond (3) et un bord latéral (5) définissant un volume intérieur (7), ladite paroi de fond comportant des nervures (9) en relief vers l'intérieur du plateau, au moins une cloison de séparation (10) pour diviser ledit volume intérieur du plateau en au moins deux parties (12, 14) et des moyens (16) pour monter ladite cloison de séparation (10) déplaçable dans ledit plateau (1) entre au moins deux positions, une première position (P1) dans laquelle ladite cloison de séparation (10) est sensiblement perpendiculaire au plan général de la paroi de fond (3), et une seconde position (P2) dans laquelle ladite cloison de séparation est plaquée contre la paroi de fond (3), **caractérisé par le fait que**, dans sa seconde position, ladite cloison de séparation est plaquée contre la paroi de fond dans une zone (18) de la paroi de fond (3) ne comportant pas de nervure et que l'épaisseur (Eₚ) de ladite cloison de séparation est au plus égale à la hauteur (h) des nervures (9) faisant saillie sur la paroi de fond (3) du plateau.

2. Bac selon la revendication 1, **caractérisé par le fait que** les moyens (16) pour monter ladite cloison de séparation (10) déplaçable entre les deux positions (P1, P2) comportent au moins une paire d'ergots (21, 22, ...) montée à chacune des deux extrémités (24, 26) de ladite cloison de séparation (10), les quatre ergots (21, 22, ...) étant situés en saillie sur les extrémités (24, 26) de ladite cloison de séparation sensiblement dans le plan général de ladite cloison, deux rainures (28, 29) en regard l'une de l'autre réalisées sur le bord latéral (5) du plateau, les deux rainures étant situées dans un même plan sensiblement perpendiculaire à la paroi de fond (3) du plateau, lesdites rainures étant agencées de façon que les ergots (21, 22, ...) puissent y coulisser, la distance séparant les extrémités libres les plus éloignées des ergots étant inférieure à la distance séparant les fonds des deux rainures, et la longueur de la cloison de séparation étant au plus égale à la distance séparant les plans des ouvertures d'entrée des deux rainures.

3. Bac selon la revendication 2, **caractérisé par le fait que** chaque rainure (28, 29) est délimitée par deux bossages (31, 32) oblongs parallèles en saillie sur le bord latéral (5) du plateau vers l'intérieur du dit plateau.

4. Bac selon l'une des revendications 2 et 3, **caractérisé par le fait que** la largeur de la cloison de séparation (10) est sensiblement égale à la profondeur (H) du plateau (1).

5. Bac selon l'une des revendications 1 à 4, **caractérisé par le fait que** l'épaisseur (Eₚ) de la cloison de séparation (10) est inférieure à la hauteur (h) des nervures (9) faisant saillie sur la paroi de fond (3) du plateau.

6. Bac selon l'une des revendications précédentes, **caractérisé par le fait que** le plateau (1) comporte une nervure continue (9') reliant les deux portions opposées du bord latéral (5) du plateau sur lesquelles sont respectivement réalisées les deux rainures (28, 29), ladite nervure continue bordant ladite zone (18) ne comportant pas de nervure (9) faisant saillie sur la paroi de fond (3) du plateau et étant située dans le demi-espace (ES) défini par le plan passant sensiblement par les deux rainures (28, 29) et ne contenant pas la cloison de séparation (10) quand elle est dans sa seconde position (P2).

7. Bac selon l'une des revendications précédentes, **caractérisé par le fait qu'**il comporte au moins une entretoise de division (40, 42, ...) amovible et des moyens (50) pour relier ladite entretoise de division à deux points appartenant respectivement aux deux éléments des deux paires d'éléments suivantes : le rebord libre du bord latéral (5) du plateau (1) et le rebord (44) de la cloison de séparation (10) qui est le plus éloigné de la paroi de fond (3) du plateau (1) quand cette cloison de séparation (10) est dans sa première position (P1), les rebords libres de deux cloisons de séparation (10).

8. Bac selon la revendication 8, **caractérisé par le fait que** les moyens (50) pour relier ladite entretoise de division (40, 42, ...) aux deux dits points sont constitués par des emboîtements mâle-femelle comportant chacun un téton (51) et une encoche correspondante (52) apte à emprisonner le téton par enclipsage.

9. Bac selon l'une des revendications précédentes, **caractérisé par le fait que** le plateau (1) et les bossages (31, 32) sont réalisés d'une seule pièce par moulage.

## Claims

1. A vessel for lining a motor vehicle trunk or the like, the vessel comprising a tray (1) having a bottom wall (3) and a side wall (5) defining an inside volume (7), said bottom wall in including ribs (9) in relief towards the inside of the tray, at least one separator partition (10) for dividing said inside volume of the tray into at least two portions (12, 14), and means (16) for mounting said separator partition (10) movably in said tray (1) between at least two positions, a first position (P1) in which said separator partition (10) is substantially perpendicular to the general plane of the bottom wall (3), and a second position (P2) in which said separator partition is pressed against the bottom wall (3), the vessel being **characterized by** the fact that, in its second position, said separator partition is pressed against the bottom wall in a zone (18) of the bottom wall (3) that does not include a rib, and that the thickness (Eₚ) of said separator partition is no greater than the height (h) of the ribs (9) projecting from the bottom wall (3) of the tray.

2. A vessel according to claim 1, **characterized by** the fact that the means (16) for mounting said separator partition (10) movably between the two positions (P1, P2) comprise at least one pair of lugs (21, 22, ...) mounted at each of the two ends (24, 26) of said separator partition (10), the four lugs (21, 22, ...) being situated projecting from the ends (24, 26) of said separator partition substantially in the general plane of said partition, two grooves (28, 29) facing each other made in the side wall (5) of the tray, the two grooves being situated in a common plane substantially perpendicular to the bottom wall (3) of the tray, said grooves being arranged in such a manner that the lugs (21, 22, ...) can slide therein, the distance between the farthest-apart free ends of the lugs being less than the distance between the bottoms of the two grooves, and the length of the separator partition being no greater than the distance between the planes of the inlet openings of the two grooves.

3. A vessel according to claim 2, **characterized by** the fact that each groove (28, 29) is defined by two parallel oblong projections (31, 32) projecting from the side wall (5) of the tray towards the inside of said tray.

4. A vessel according to claim 2 or claim 3, **characterized by** the fact that the width of the separator partition (10) is substantially equal to the depth (H) of the tray (1).

5. A vessel according to any one of claims 1 to 4, **characterized by** the fact that the thickness (Eₚ) of the separator partition (10) is less than the height (h) of the ribs (9) projecting from the bottom wall (3) of the tray.

6. A vessel according to any preceding claim, **characterized by** the fact that the tray (1) includes a continuous rib (9') connecting together the two opposite portions of the side wall (5) of the tray that have the two grooves (28, 29) formed respectively therein, said continuous rib bordering said zone (18) that does not have any rib (9) projecting from the bottom wall (3) of the tray, and being situated in the half-space (ES) defined by the plane passing substantially through the two grooves (28, 29) and not containing the separator partition (10) when it is in its second position (P2).

7. A vessel according to any preceding claim, **characterized by** the fact that it includes at least one removable division spacer (40, 42, ...) and means (50) for connecting said division spacer to two points belonging to respective ones of two elements of the following two pairs of elements: the free rim of the side wall (5) of the tray (1) and the rim (44) of the separator partition (10) that is farthest from the bottom wall (3) of the tray (1) when said separator partition (10) is in its first position (P1); the free rims of the two separator partitions (10).

8. A vessel according to claim 7, **characterized by** the fact that the means (50) for connecting said division spacer (40, 42, ...) to said two points are constituted by male-female engagements, each including a stud (51) and a corresponding notch (52) suitable for holding the stud captive by snap-fastening.

9. A vessel according to any preceding claim, **characterized by** the fact that the tray (1) and the projections (31, 32) are made as a one-piece molding.

## Patentansprüche

1. Wanne für die Auskleidung eines Kofferraums eines Kraftfahrzeugs oder dergleichen, mit einer Platte (1), die eine Bodenwand (3) und einen Seitenrand (5) aufweist, die ein Innenvolumen (7) definieren, wobei die Bodenwand Stege (9), die in die Platte vorstehen, wenigstens eine Trennwand (10), um das Innenvolumen der Platte in wenigstens zwei Teile (12, 14) zu unterteilen, und Mittel (16), um die Trennwand (10) in der Platte (1) verlagerbar zwischen wenigstens zwei Positionen zu montieren, umfasst, wobei die Trennwand (10) in einer ersten Position (P1) zu der allgemeinen Ebene de Bodenwand (3) im Wesentlichen senkrecht ist und wobei die Trennwand in einer zweiten Position (P2) gegen die Bodenwand (3) gedrückt wird, **dadurch gekennzeichnet, dass** die Trennwand in der zweiten Position in einer Zone (18) der Bodenwand (3), die keinen Steg aufweist, gegen die Bodenwand gedrückt wird und dass die Dicke (Eₚ) der Trennwand höchstens gleich der Höhe (h) der Stege (9) ist, um die sie von der Bodenwand (3) der Platte vorstehen.

2. Wanne nach Anspruch 1, **dadurch gekennzeichnet, dass** die Mittel (16) zum Montieren der Trennwand (10), die zwischen zwei Positionen (P1, P2) verlagerbar ist, wenigstens ein Paar Ansätze (21, 22, ...), die an jedem der zwei Enden (24, 26) der Trennwand (10) montiert sind, wobei die vier Ansätze (21, 22, ...) an den Enden (24, 26) der Trennwand im Wesentlichen in der allgemeinen Ebene der Trennwand vorstehen, und zwei Rinnen (28, 29), die sich einander gegenüber befinden und in dem Seitenrand (5) der Platte verwirklicht sind, umfassen, wobei sich die zwei Rinnen in derselben Ebene befinden, die zu der Bodenwand (3) der Platte im Wesentlichen senkrecht ist, wobei die Rinnen in der Weise angeordnet sind, dass die Ansätze (21, 22, ...) darin gleiten können, wobei der Abstand, der die am weitesten voneinander entfernten freien Enden der Ansätze trennt, kleiner ist als der Abstand, der die Böden der zwei Rinnen trennt, und wobei die Länge der Trennwand höchstens gleich dem Abstand ist, der die Ebenen der Eintrittsöffnungen der zwei Rinnen trennt.

3. Wanne nach Anspruch 2, **dadurch gekennzeichnet, dass** jede Rinne (28, 29) durch zwei Bossen (31, 32) begrenzt ist, die lang gestreckt und parallel sind und von dem Seitenrand (5) der Platte in den Innenraum der Platte vorstehen.

4. Wanne nach einem der Ansprüche 2 und 3, **dadurch gekennzeichnet, dass** die Breite der Trennwand (10) im Wesentlichen gleich der Tiefe (H) der Platte (1) ist.

5. Wanne nach einem der Ansprüche 1 bis 4, **dadurch gekennzeichnet, dass** die Dicke (Eₚ) der Trennwand (10) kleiner ist als die Höhe (h) der Stege (9), die von der Bodenwand (3) der Platte vorstehen.

6. Wanne nach einem der vorhergehenden Ansprüche, **dadurch gekennzeichnet, dass** die Platte (1) einen ununterbrochenen Steg (9') aufweist, der die zwei gegenüberliegenden Abschnitte des Seitenrandes (5) der Platte verbindet, in denen die zwei Rinnen (28, 29) verwirklicht sind, wobei der ununterbrochene Steg an die Zone (18) angrenzt, die keinen Steg (9) aufweist, der von der Bodenwand (3) der Platte vorsteht, und sich in dem Halbraum (ES) befindet, der durch die Ebene definiert ist, die im Wesentlichen durch die zwei Rinnen (28, 29) verläuft und die Trennwand (10) nicht enthält, wenn diese in ihrer zweiten Position (P2) ist.

7. Wanne nach einem der vorhergehenden Ansprüche, **dadurch gekennzeichnet, dass** sie wenigstens einen abnehmbaren Teilungsabstandshalter (40, 42, ...) und Mittel (50) umfasst, um den Teilungsabstandhalter mit zwei Punkten zu verbinden, die jeweils zu zwei Elementen von zwei Paaren der folgenden Elemente gehören: freie Kante des Seitenrandes (5) der Platte (1), Kante (44) der Trennwand (10), die von der Bodenwand (3) der Platte (1) am weitesten entfernt ist, wenn diese Trennwand (10) in ihrer ersten Position (P1) ist, und freie Kanten von zwei Trennwänden (10).

8. Wanne nach Anspruch 8, **dadurch gekennzeichnet, dass** die Mittel (50) zum Verbinden des Teilungsabstandshalters (40, 42, ...) mit den zwei Punkten durch Stecker-Buchsen-Steckverbindungen gebildet sind, die jeweils einen Zapfen (51) und eine entsprechende Nut (52), die den Zapfen durch Einrasten einschließen kann, enthalten.

9. Wanne nach einem der vorhergehenden Ansprüche, **dadurch gekennzeichnet, dass** die Platte (1) und die Bossen (31, 32) durch Gießen einteilig verwirklicht sind.
